Europäisches Patentamt

European Patent Office

Office européen des brevets

(19)

(11) Veröffentlichungsnummer: **0 440 837 B1**

(12) **EUROPÄISCHE PATENTSCHRIFT**

(45) Veröffentlichungstag der Patentschrift: **15.06.94**

(21) Anmeldenummer: **90102254.1**

(22) Anmeldetag: **06.02.90**

(51) Int. Cl.⁵: **C08L 23/04**, C08L 73/00, C08K 5/09, //(C08L23/04,73:00, C08K5:09),(C08L23/04,23:08, C08K5:09)

(54) **Abbaufähige Polymerisatmischungen.**

(43) Veröffentlichungstag der Anmeldung:
**14.08.91 Patentblatt 91/33**

(45) Bekanntmachung des Hinweises auf die Patenterteilung:
**15.06.94 Patentblatt 94/24**

(84) Benannte Vertragsstaaten:
**AT BE DE FR IT NL SE**

(56) Entgegenhaltungen:
**EP-A- 0 230 143**
**DE-A- 2 616 257**
**US-A- 3 676 401**

(73) Patentinhaber: **HOECHST AKTIENGESELL-SCHAFT**

**D-65926 Frankfurt(DE)**

(72) Erfinder: **Hobes, John, Dr.Dipl.-Chem.**
**Erna Strasse 2b**
**D-4220 Dinslaken(DE)**
Erfinder: **Falzone, Michele, Dr.**
**Via Alleata 16**
**Saronno / Varese(IT)**
Erfinder: **Payer, Wolfgang, Dr. Dipl.-Chem.**
**Zedernweg 58**
**D-4230 Wesel 1(DE)**

**Beschreibung**

Die vorliegende Erfindung betrifft unter Lichteinwirkung und den Bedingungen der Kompostierung abbaufähige Polymerisatmischungen, ein Verfahren zu ihrer Herstellung und ihre Verwendung als Folienmaterial.

Kunststoffe werden in stetig zunehmendem Umfang für die verschiedensten Anwendungszwecke in Industrie, Handel und Gewerbe eingesetzt. Sie haben sich insbesondere als Verpackungsmaterial sehr gut bewährt. Allerdings steht den zahlreichen Vorzügen, die Kunststoffe im Vergleich zu anderen Werkstoffen aufweisen, ein Nachteil, nämlich die geringe Abbaufähigkeit gegenüber. Kunststoffe bleiben lange Zeit unverändert, ehe sie verwittern. In den meisten Fällen erfolgt ein Abbau nur sehr langsam.

Nur einige wenige Kunststoffe werden bei der Lagerung im Freien, in Deponien oder bei Kompostierung durch dabei ablaufende biologische, chemische, thermische oder fotochemische Prozesse in nennenswertem Maße angegriffen. Hierzu gehören einige halbsynthetische Celluloseester und bestimmte aliphatische Polyester.

Sehr häufig verwendete Massenkunststoffe wie Polyethylen oder Polyethylencopolymerisate widerstehen jedoch derartigen Abbauvorgängen weitgehend und verrotten nur sehr langsam. Für die Umwelt stellen sie daher eine nicht unerhebliche Belastung dar.

Es hat in der Vergangenheit nicht an Versuchen gefehlt, Polyethylen enthaltende Kunststoffe herzustellen, die unter Lichteinwirkung bzw. den Bedingungen der Kompostierung abgebaut werden.

Die GB-A- 1 128 793 und die US-A-3676401 beschreiben ein durch ultraviolettes Licht abbaubares Verpackungsmaterial, das durch Copolymerisation von Ethylen und Kohlenmonoxid hergestellt wird. Die Copolymerisate enthalten neben Ethylen bis zu 18 % Kohlenmonoxid. Ein Zusatz von Metallsalzen, insbesondere Salzen des Eisens, Kupfers oder Mangans soll die unter Einfluß des Sonnenlichtes ablaufende Oxidation und Zersetzung der Copolymerisate beschleunigen.

Die DE-A-2316697 betrifft eine durch Einwirken von ultravioletter Bestrahlung fotozersetzbare Polymersubstanz, die aus einem üblichen Ethylenhomopolymerisat oder Ethylencopolymerisat und einem Ethylen-Kohlenmonoxid-Copolymerisat besteht, wobei diese Mischung 0,1 bis etwa 15 Gew.-% durch Einpolymerisieren von Kohlenmonoxid erzeugte Carbonylgruppen bezogen auf die gesamte Polymersubstanz enthält.

Die vorstehend beschriebenen Problemlösungen weisen allerdings Nachteile auf. Zwar besitzen die gemäß der GB-A-1128793 herstellbaren Copolymerisate eine relativ gute Abbaufähigkeit, sie sind jedoch nur mittels eines speziellen Verfahrens, das jeweils lediglich auf einen einzigen Kohlenmonoxidgehalt ausgerichtet ist, zugänglich. Wird ein anderer Kohlenmonoxidgehalt im Copolymerisat gewünscht, ist das Polymerisationsverfahren insgesamt dieser Forderung anzupassen.

Dieser Mangel wird bei der Herstellung abbaubarer Ethylenpolymerisate gemäß der DE-A-2316697 umgangen. Anstatt das gesamte abbaufähige Produkt durch ein besonderes, jeweils auf den gewünschten Kohlenmonoxid-Anteil ausgerichtetes Syntheseverfahren herstellen zu müssen, benötigt man vergleichsweise geringe Mengen des Ethylen-Kohlenmonoxid-Copolymers. Durch Vermischen dieses Copolymerisats mit üblichen Homo- oder Copolymerisaten des Ethylens erhält man die fotozersetzbaren Kunststoffe. Zwar sind diese leicht zugänglich, aber sie lassen hinsichtlich ihres Abbauverhaltens noch zu wünschen übrig.

In der DE-A-2 616 257 werden durch Licht abbaubare Polymermassen, darunter auch Homopolymerisate des Ethylens, beschrieben, denen Eisen(II)-salze von Carbonsäuren zugesetzt wurden, die zumindest eine weitere Carboxylgruppe oder eine Sulfonsäuregruppe, Alkoholgruppe oder Amidgruppe enthält. Das Abbauverhalten auch dieser Massen befriedigt noch nicht.

Die zuvor erläuterten Nachteile werden beseitigt durch unter Lichteinwirkung abbaufähige Polymerisatmischungen bestehend aus (a) einem durch Hochdrucksynthese hergestelltem Ethylenhomopolymerisat mit einem Schmelzindex MFI (190/2,16) von 0,2 bis 3,0 g/10 min oder einem Ethylen-Vinylacetat-Copolymerisat mit einem Schmelzindex MFI (190/2,16) von 0,2 bis 3,0 g/10 min und (b) einem Ethylen, Kohlenmonoxid und gegebenenfalls weitere polymerisierbare Bestandteile enthaltendem Mischpolymerisat in einer solchen Menge, daß die Polymerisatmischung 0,5 bis 5 Gew.-% Kohlenmonoxid aufweist, und (c) 10 bis 150 ppm eines Carboxylats von Metallen unter den Elementen mit der Ordnungszahl 22 bis 48.

Die erfindungsgemäßen Polymerisatmischungen weisen folgende Vorteile auf. Sie sind erstens leicht zugänglich, da sie aus üblichen, in technischen Mengen verfügbaren Komponenten bestehen, die lediglich miteinander zu vermischen und gegebenenfalls zu verarbeiten sind. Sie decken zweitens ein sehr weites Anwendungsfeld ab, da die Abbaufähigkeit sowohl über den Kohlenmonoxidanteil als auch über die Menge des zugesetzten Carbonsäuresalzes beeinflußt werden kann. Dies wiederum wirkt sich in einer größeren Variationsmöglichkeit des Verhältnisses Ethylenhomopolymerisat oder Ethylen-Vinylacetat-Copolymerisat zu dem Kohlenmonoxid enthaltenden Mischpolymerisat aus.

2

Dadurch wird es möglich, unter Einhalten einer bestimmten Abbaufähigkeit die übrigen Eigenschaften wie Zähigkeit, Reißfestigkeit, Transparenz, Dehnverhalten, Ausziehfähigkeit zu variieren. Umgekehrt bereitet es keine Schwierigkeiten, beispielsweise eine bestimmte Zähigkeit oder Reißfestigkeit vorzugeben und die Abbaufähigkeit nach Wunsch einzustellen.

Zum dritten zeichnen sich die erfindungsgemäßen Polymerisatmischungen durch eine verbesserte Abbaufähigkeit aus, weil überraschenderweise der Kohlenmonoxidanteil und der Carbonsäuresalzgehalt hinsichtlich des Abbauverhaltens nicht additiv wirken, sondern einen über die Wirkung der Einzelkomponenten hinausgehenden, synergistischen Effekt erzielen.

Die abbaufähigen Polymerisatmischungen bestehen aus 75 bis 95 Gew.-% des Ethylenhomopolymerisat und 5 bis 25 Gew.-% des Kohlenmonoxid enthaltenden Mischpolymerisats oder aus 60 bis 90 Gew.-% des Ethylen-Vinylacetat-Copolymerisats und 10 bis 40 Gew.-% des Kohlenmonoxid enthaltenden Mischpolymerisats.

Das durch Hochdrucksynthese hergestellte Ethylenhomopolymerisat weist einen Schmelzindex MFI (190/2,16) von 0,2 bis 3,0, insbesondere 0,4 bis 2,5, bevorzugt 0,7 bis 2,0 g/10 min (gemessen nach DIN 53735) auf. Die Ethylen-Vinylacetat-Copolymerisate besitzen einen Schmelzindex MFI (190/2,16) von 0,2 bis 3,0, insbesondere 0,4 bis 2,5, bevorzugt 0,7 bis 2,0 g/10 min.

Die Herstellung dieser Homo- und Copolymerisate des Ethylens erfolgt durch Umsetzung des Monomeren bzw. der Monomerengemische bei 50 bis 350 MPa und 100 bis 350°C in Gegenwart von Sauerstoff oder Radikale bildenden Verbindungen. Hierzu wird Ethylen oder eine aus 100 Gew.-Teilen Ethylen und 1,5 bis 25, insbesondere 2,5 bis 20, bevorzugt 3,0 bis 18 Gew.-Teilen Vinylacetat bestehende Mischung polymerisiert.

Die Polymerisation wird unter einem Druck von 50 bis 350, insbesondere 100 bis 300, bevorzugt 125 bis 275 MPa durchgeführt. Die Polymerisationstemperatur beträgt 100 bis 350°C, insbesondere 120 bis 325, bevorzugt 130 bis 300°C.

Als Polymerisationsinitiatoren werden Sauerstoff oder Radikale bildende Verbindungen eingesetzt. Zu den Radikale bildenden Verbindungen zählen organische Peroxide, Hydroperoxide oder Azoverbindungen. Bewährt haben sich Peroxide der Klassen Diacylperoxide, Peroxydicarbonate, Alkylperester, Perketale, Dialkylperoxide, Ketonperoxide und Alkylhydroperoxide.

Die Radikale bildenden Verbindungen können allein oder im Gemisch verwendet werden. Die Polymerisationsinitiatoren werden in einer Konzentration von 3 bis 50, vorzugsweise 5 bis 40, insbesondere 10 bis 25 Gew.-ppm, bezogen auf Ethylen, eingesetzt. Man führt sie der Polymerisation direkt oder als Lösung in einem organischen Löungsmittel zu. Als Lösungsmittel dienen Kohlenwasserstoffe wie Isooctan, Benzol, Toluol oder Benzinfraktionen. Die Verweilzeit des Monomerengemisches in der Polymerisationsstufe beträgt 30 bis 180, insbesondere 50 bis 160 und bevorzugt 60 bis 140 sekunden.

Die Umsetzung kann in den für die Polymerisation von Ethylen und Ethylen enthaltenden Monomerengemischen bekannten Hochdruckreaktoren erfolgen. Hierzu gehören Rührautoklaven und Rohrreaktoren (vgl. Ullmanns Encyclopädie der Technischen Chemie, 4. Auflage, Verlag Chemie Weinheim-Basel 1980, Band 19, Seite 169, 172 bis 175). Bei Verwendung eines Rohrreaktors kann das gesamte, bereits Initiatoren enthaltende Monomerengemisch in einem Strom dem Reaktor zugeführt werden. Besonders vorteilhaft ist es jedoch, einen Rohrreaktor mit Kaltgas- und Initiatornachdosierung zu verwenden und das Monomerengemisch in mindestens zwei Teilströme aufzuteilen. Hierbei wird ein Teilstrom dem Reaktoreingang zugeführt, weitere Teilströme werden längs des Reaktors, meist im Bereich einer Spitzentemperatur, der Reaktionszone zugeleitet.

Anstelle der vorstehend genannten Polymerisationsinitiatoren können gegebenenfalls auch Katalysatoren, die aus einer metallorganischen Verbindung eines Elementes der 3. Gruppe des Periodensystems der Elemente und einer Titanverbindung bestehen (sogenannte Ziegler-Katalysatoren), verwendet werden.

Falls gewünscht, kann die Umsetzung auch in Anwesenheit gesonderter Molekularmassenregler (Moderatoren) durchgeführt werden. Molekularmassenregler sind Verbindungen, die den Monomeren in unterschiedlicher Konzentration zugesetzt werden, um das Wachstum des polymeren Moleküls und damit die Molmasse des Polymerisats zu beeinflussen. Zu den Molmassenreglern gehören Vertreter der unterschiedlichsten Stoffklassen. Als Beispiele seien genannt: Wasserstoff, Alkane, unverzweigte alpha-Olefine, Alkohole, Aldehyde und Ketone (vgl. Fortschr. Hochpolym.-Forschg. 7(3), 386-448).

Das Ethylen, Kohlenmonoxid und gegebenenfalls weitere polymerisierbare Bestandteile enthaltende Mischpolymerisat besteht aus 60 bis 96, insbesondere 65 bis 92, bevorzugt 70 bis 90 Gew.-Teilen Ethylen, 5 bis 20, insbesondere 7 bis 15, bevorzugt 8 bis 14 Gew.-Teilen CO und gegebenenfalls 1 bis 18, insbesondere 2 bis 15, bevorzugt 3 bis 12 Gew.-Teilen eines weiteren Monomeren. Als weiteres Monomeres sind Vinylester, Vinylether und Ester der Acrylsäure oder Methacrylsäure und einem aliphatischen $C_1$ bis $C_8$-Alkohol zu nennen. Besonders geeignet sind Vinylacetat, Methyl-, Ethyl oder Butyl-acrylat.

3

Die Mischpolymerisate lassen sich durch Polymerisation der entsprechenden Monomermischungen unter den bereits vorstehend aufgeführten Reaktionsbedingungen herstellen. Ihre Synthese ist auch in der DE-AS 23 01 889 beschrieben.

Man setzt das Kohlenmonoxid enthaltende Mischpolymerisat in einer solchen Menge ein, daß die erfindungsgemäße Polymerisatmischung 0,5 bis 5, insbesondere 0,7 bis 4,0, bevorzugt 1,0 bis 3,0 Gew.-% Kohlenmonoxid (in ein-polymerisierter Form) aufweist.

Als dritte Komponente enthält die Polymerisatmischung 10 bis 150, insbesondere 15 bis 120, bevorzugt 20 bis 100 ppm eines Carbonsäuresalzes eines Elementes der Ordnungszahl 22 bis 48, insbesondere 24 bis 30. Gut geeignet sind Carbonsäuresalze des Vanadins, Chroms, Mangans, Eisens, Kobalts, Nickels und Kupfers, besonders bewährt haben sich Carbonsäuresalze des Eisens oder Kobalts. In vielen Fällen haben sich Carbonsäuresalze des Eisens als besonders geeignet erwiesen.

Es lassen sich Salze aliphatischer, cycloaliphatischer, araliphatischer und/oder aromatischer Carbonsäuren, insbesondere aliphatischer Carbonsäuren mit $C_4$ bis $C_{14}$ C-Atomen verwenden.

Unter den Salzen aliphatischer Carbonsäuren sind Salze der Mono- und Dicarbonsäuren mit $C_4$ bis $C_{14}$ C-Atomen, insbesondere Salze der 2-Ethylhexansäure, der Isononansäure (hergestellt durch Hydroformylierung von Diisobutylen und nachfolgende Oxidation des Hydroformylierungsproduktes), Isotridecansäure (hergestellt durch Hydroformylierung von Tetrapropylen und nachfolgende Oxidation des Hydroformylierungsproduktes), der Adipinsäure, Maleinsäure, bevorzugt Salze der 2-Ethylhexansäure hervorzuheben. Aber auch Salze aromatischer Carbonsäuren, wie Benzoesäure, Salicylsäure, Phthalsäure, - oder - Naphthoesäure, lassen sich verwenden.

Die Polymerisatmischungen stellt man her, indem man die einzelnen Komponenten, nämlich das Ethylenhomopolymerisat oder das Ethylen-Vinylacetat-Copolymerisat, das Kohlenmonoxid enthaltende Mischpolymerisat und das Carbonsäuresalz unter Vermischung bis zum Schmelzen erwärmt und gegebenenfalls extrudiert. Für die Extrusion lassen sich handelsübliche Extruder wie Doppelschneckenextruder gebrauchen.

Aufgrund ihrer besonderen Eigenschaften - zu erwähnen sind die Transparenz, Steifigkeit, Glanz, Zähigkeit, Reißfestigkeit - sind die Polymerisatmischungen vorzüglich als Folienmaterial zu verwenden.

Experimenteller Teil

Herstellung der abbaufähigen Polymerisatmischungen

Als Einzelkomponenten werden das Ethylenhomopolymerisat $(a_1)$, oder das Ethylen-Vinylacetat-Copolymerisat $(a_2)$ (Schmelzindex MFI (190/2,16) jeweils 0,2 bis 3,0 g/10 min), das Kohlenmonoxid und gegebenenfalls weitere polymerisierbare Bestandteile enthaltende Mischpolymerisat (b) und das Carbonsäuresalz (c), hier Eisen-2-ethylhexanoat, verwendet. Man vermischt die Einzelkomponenten im gewünschten Verhältnis, erhitzt auf eine oberhalb des Schmelzbereiches liegende Temperatur von etwa 130 bis 150°C und extrudiert.

Die für den Bestrahlungsversuch vorgesehenen Proben weisen bereits die für die Bestimmung des Restwertes der Schlagzugzähigkeit erforderliche Form auf.

Bestrahlungsversuch

Der Einfluß der Lichteinwirkung auf das Abbauverhalten der Proben wird mittels eines Schnellbelichtungs-Tischgerätes (Bezeichnung Original: Hanau Suntest; Handelsprodukt der Firma Heraeus) bestimmt. Die Bestrahlungsstärke beträgt im Wellenbereich zwischen 300 und 800 nm (Globalstrahlung) 820 W/m². Die Beleuchtungsstärke liegt bei circa 150 kLux. Die Strahlung wird bei 280 nm (1 nm = $10^{-9}$ m) begrenzt.

Als Maß für die Abbaufähigkeit der zu untersuchenden Probe dient die Verringerung der Schlagzugzähigkeit, die nach einem normierten Verfahren (DIN 53 448) ermittelt wird. Die Proben werden als hinreichend abgebaut angesehen, sobald die Schlagzugzähigkeit auf einen Restwert ≦50 % der ursprünglichen Schlagzugzähigkeit abgesunken ist. Die hierfür erforderliche Bestrahlungsdauer ist die Versprödungszeit.

Die erzielten Ergebnisse sind in der nachfolgenden Tabelle zusammengestellt. Die Beispiele A, B, C und D sind Vergleichsversuche, die Beispiele 1 bis 8 betreffen erfindungsgemäße Polymerisatmischungen. Unter Ausgangsstoff sind die Einzelkomponenten $(a_1)$, $(a_2)$, $(b_1)$ und $(b_2)$ aufgeführt. Die untersuchten Polymerisatmischungen sind durch Angabe des Kohlenmonoxid-, des Eisen-2-ethylhexanoat-Gehaltes und der Versprödungszeit charakterisiert.

Der über die Wirkung der Einzelkomponenten (b) und (c) hinausgehende synergestische Effekt wird durch Vergleich der Beispiele A und B sowie A und C auf der einen Seite mit Beispiel 3 auf der anderen Seite belegt. So sinkt die Versprödungszeit in Beispiel B auf 252 : 600 x 100 = 42 % und in Beispiel C auf 225 : 600 x 100 = 37,5 % der in Beispiel A ausgewiesenen Versprödungszeit. Eine rein additive Wirkung des CO-Gehaltes (1,0 Gew.-%) und des Fe-2-ethylhexanoats (75 ppm) würde eine Versprödungszeit von 600 x 42 % x 37,5 % entsprechend 94,5 Stunden ergeben. Wie jedoch aus Beispiel 3 hervorgeht, liegt die tatsächlich ermittelte Versprödungszeit eines Produktes, das 1,0 Gew.-% CO und 75 ppm Fe-2-ethylhexanoat enthält, mit nur 36 Stunden weit unter dem einer additiven Wirkung entsprechenden Wert von 94,5 Stunden. Dies belegt den synergistischen Effekt, der auf das gleichzeitige Vorliegen der Einzelkomponenten (b$_2$) und (c) zurückzuführen ist.

In dem nachfolgenden Diagramm ist die Veränderung der Schlagzugzähigkeit in Abhängigkeit von der Bestrahlungszeit anhand der in den Beispielen A, B, C, 2 und 3 verwendeten Proben dargestellt.

Tabelle

| Polymerisatmischung | | | | | |
|---|---|---|---|---|---|
| Beispiel | Ausgangsstoff | | CO-Gehalt (Gew.-%) | Fe-2-ethylhexanoat (ppm) | Versprödungszeit (Stunden) |
| A | $a_1$ | – | – | – | 600 |
| B | $a_1$ | $b_1$ | 1,0 | – | 252 |
| C | $a_1$ | – | – | 75 | 225 |
| 1 | $a_1$ | $b_2$ | 1,0 | 25 | 130 |
| 2 | $a_1$ | $b_2$ | 1,0 | 50 | 95 |
| 3 | $a_1$ | $b_2$ | 1,0 | 75 | 36 |
| 4 | $a_1$ | $b_1$ | 0,3 | 100 | 145 |
| 5 | $a_1$ | $b_1$ | 0,6 | 100 | 75 |
| 6 | $a_1$ | $b_1$ | 5,0 | 50 | 24 |
| 7 | $a_1$ | $b_2$ | 2,3 | 25 | 125 |
| D | $a_2$ | – | – | – | 580 |
| 8 | $a_2$ | $b_1$ | 1,7 | 75 | 24 |

$a_1$: Ethylenhomopolymerisat MFI (190/2,16) = 2,5 g/10 min; Schlagzugzähigkeit 450 mJ/mm$^2$ Verkaufsprodukt der Firma Enichem:  Bezeichnung Riblene®D J 4024

$a_2$: Ethylen-Vinylacetat-Copolymerisat mit 8 bis 10 Gew.-% Vinylacetat; MFI (190/2,16) = 2,6 g/10 min; Schlagzugzähigkeit 1500 mJ/mm$^2$, Verkaufsprodukt der Firma Enichem: Bezeichnung Riblene®D JV 1025

$b_1$: Ethylen-Kohlenmonoxid-Mischpolymerisat mit 13,8 Gew.-% CO; MFI (190/2,16) = 2,4 g/10 min

$b_2^1$: Ethylen-Kohlenmonoxid-Mischpolymerisat mit 18 Gew.-% CO; MFI (190/2,16) = 2,6 g/10 min

**Patentansprüche**

1. Unter Lichteinwirkung abbaufähige Polymerisat-mischungen bestehend aus (a) einem durch Hochdrucksynthese hergestelltem Ethylenhomopolymerisat mit einem Schmelzindex MFI (190/2,16) von 0,2 bis 3,0 g/10 min oder einem Ethylen-Vinylacetat-Copolymerisat mit einem Schmelzindex MFI (190/2,16) von 0,2 bis 3,0 g/10 min und (b) einem Ethylen, Kohlenmonoxid und gegebenenfalls weitere polymerisierbare Bestandteile enthaltenden Mischpolymerisat in einer solchen Menge, daß die Polymerisatmischung 0,5 bis 5 Gew.-% Kohlenmonoxid aufweist, und (c) 10 bis 150 ppm eines Carboxylats von Metallen unter den Elementen mit der Ordnungszahl 22 bis 48 .

2. Polymerisatmischungen nach Anspruch 1, dadurch gekennzeichnet, daß sie aus 75 bis 95 Gew.-% des Ethylenhomopolymerisat und 5 bis 25 Gew.-% des Kohlenmonoxid enthaltenden Mischpolymerisats oder 60 bis 90 Gew.-% des Ethylen-Vinylacetat-Copolymerisats und 10 bis 40 Gew.-% des Kohlenmonoxid enthaltenden Mischpolymerisats besteht.

3. Polymerisatmischungen nach einem der Ansprüche 1 und 2, dadurch gekennzeichnet, daß das Ethylen-Vinylacetat-Copolymerisat 3 bis 18 Gew.-% Vinylacetat enthält.

4. Polymerisatmischungen nach einem oder mehreren der Ansprüche 1 bis 3, dadurch gekennzeichnet, daß das Kohlenmonoxid enthaltende Mischpolymerisat aus 60 bis 96 Gew.-Teilen Ethylen, 5 bis 20 Gew.-Teilen Kohlenmonoxid und gegebenenfalls 1 bis 18 Gew.-Teilen eines weiteren Monomeren besteht.

5. Polymerisatmischungen nach einem oder mehreren der Ansprüche 1 bis 4, dadurch gekennzeichnet, daß sie ein Carbonsäuresalz des Eisens oder Kobalts enthalten.

6. Polymerisatmischungen nach einem oder mehreren der Ansprüche 1 bis 4, dadurch gekennzeichnet, daß sie ein Carbonsäuresalz des Eisens enthalten.

7. Verfahren zur Herstellung von Polymerisatmischungen nach einem oder mehreren der Ansprüche 1 bis 6, dadurch gekennzeichnet, daß das Ethylenhomopolymerisat oder das Ethylen-Vinylacetat-Copolymerisat, das Kohlenmonoxid enthaltende Mischpolymerisat und das Eisencarbonsäuresalz unter Vermischen bis zum Schmelzen erwärmt und gegebenenfalls extrudiert werden.

8. Verwendung von Polymerisatmischungen nach einem oder mehreren der Ansprüche 1 bis 6 als Folienmaterial.

**Claims**

1. Polymer mixtures which are degradable under the action of light consisting of (a) an ethylene homopolymer prepared by high-pressure synthesis and having a melt index MFI (190/2.16) of 0.2 to 3.0 g/10 min. or an ethylene-vinyl acetate bipolymer having a melt index MFI (190/2.16) of 0.2 to 3.0 g/10 min. and (b) a copolymer containing ethylene, carbon monoxide and, optionally, other polymerisable constituents in such amounts that the polymer mixture contains 0.5 to 5% by weight of carbon monoxide, and (c) 10 to 150 ppm of a carboxylate of metals from the elements having an atomic number of 22 to 48.

2. Polymer mixtures according to claim 1, characterised in that they consist of 75 to 95% by weight of the ethylene homopolymer and 5 to 25% by weight of the copolymer containing carbon monoxide or 60 to 90% by weight of the ethylene-vinyl acetate bipolymer and 10 to 40% by weight of the copolymer containing carbon monoxide.

3. Polymer mixtures according to either claim 1 or claim 2, characterised in that the ethylene-vinyl acetate bipolymer contains 3 to 18% by weight of vinyl acetate.

4. Polymer mixtures according to one or more of claims 1 to 3, characterised in that the copolymer containing carbon monoxide consists of 60 to 96 parts by weight of ethylene, 5 to 20 parts by weight of carbon monoxide and, optionally, 1 to 18 parts by weight of another monomer.

5. Polymer mixtures according to one or more of claims 1 to 4, characterised in that they contain a carboxylic acid salt of iron or cobalt.

EP 0 440 837 B1

**6.** Polymer mixtures according to one or more of claims 1 to 4, characterised in that they contain a carboxylic acid salt of iron.

**7.** A process for preparing polymer mixtures according to one or more of claims 1 to 6, characterised in that the ethylene homopolymer or the ethylene-vinyl acetate bipolymer, the copolymer containing carbon monoxide and the carboxylic acid salt of iron are heated with mixing until they melt and, optionally, extruded.

**8.** The use of polymer mixtures according to one or more of claims 1 to 6 as a film and sheet material.

## Revendications

**1.** Mélanges de polymères dégradables sous l'action de la lumière, constitués de (a) un homopolymère d'éthylène préparé par synthèse sous haute pression ayant un indice de fusion MFI (190/2,16) compris entre 0,2 et 3,0 g/10 min ou un copolymère d'éthylène et d'acétate de vinyle ayant un indice de fusion MFI (190/2,16) compris entre 0,2 et 3,0 g/10 min et (b) un copolymère contenant de l'éthylène, du monoxyde de carbone et éventuellement d'autres composants polymérisables, en une quantité telle que le mélange de polymères contient de 0,5 à 5 % en masse de monoxyde de carbone et (c) 10 à 150 ppm d'un carboxylate de métaux appartenant à la famille des éléments ayant un numéro atomique compris entre 22 et 48.

**2.** Mélanges de polymères selon la revendication 1, caractérisés en ce qu'ils sont constitués de 75 à 95 % en masse de l'homopolymère d'éthylène et de 5 à 25 % en masse du copolymère contenant du monoxyde de carbone, ou de 60 à 90 % en masse du copolymère d'éthylène et d'acétate de vinyle et de 10 à 40 % en masse du copolymère contenant du monoxyde de carbone.

**3.** Mélanges de polymères selon l'une des revendications 1 et 2, caractérisés en ce que le copolymère d'éthylène et d'acétate de vinyle contient de 3 à 18 % en masse d'acétate de vinyle.

**4.** Mélanges de polymères selon l'une ou plusieurs des revendications 1 à 3, caractérisés en ce que le copolymère contenant du monoxyde de carbone est constitué de 60 à 96 parties en masse d'éthylène, 5 à 20 parties en masse de monoxyde de carbone et, éventuellement, 1 à 18 parties en poids d'un autre monomère.

**5.** Mélanges de polymères selon l'une ou plusieurs des revendications 1 à 4, caractérisés en ce qu'il contiennent un sel d'acide carboxylique de fer ou de cobalt.

**6.** Mélanges de polymères selon l'une ou plusieurs des revendications 1 à 4, caractérisés en ce qu'ils contiennent un sel d'acide carboxylique de fer.

**7.** Procédé de préparation de mélanges de polymères selon l'une ou plusieurs des revendications 1 à 6, caractérisé en ce qu'on chauffe jusqu'à fusion l'homopolymère d'éthylène ou le copolymère d'éthylène et d'acétate de vinyle, le copolymère contenant du monoxyde de carbone et le sel d'acide carboxylique de fer en les mélangeant et qu'on les extrude éventuellement.

**8.** Utilisation des mélanges de polymères selon l'une ou plusieurs des revendications 1 à 6 en tant que matériaux sous forme de feuille.

8